# EUROPEAN PATENT APPLICATION

(11) **EP 4 450 188 A1**
(43) Date of publication of application: **23.10.2024**
(21) Application number: 24165529.9
(22) Date of filing: 22.03.2024
(51) Int. Cl.: B22F 3/10, B22F 3/24, B22F 10/14, B22F 10/40, B22F 10/47, B22F 10/64, B33Y 10/00, B33Y 40/20

(54) **METHODS FOR ADDITIVE MANUFACTURING PARTS WITH INTEGRATED SACRIFICIAL SUPPORTS**

(30) Priority: 18.04.2023 US 202363460192 P
(71) Applicant: General Electric Company, Schenectady, NY 12345 (US)
(72) Inventor: DILGER, Elliot C., Schenectady, 12345 (US); BROWN, Jacob W., Columbus, 47201 (US); DEHART, Taren, Columbus, 47201 (US)
(74) Representative: Hafner & Kohl PartmbB

(57) **Abstract**

A method for additive manufacturing a metal or ceramic part including forming a green metal or ceramic body (620) having sacrificial supports (610) present on at least one surface (621) of the green body (620) and placing the green body (620) into a heating chamber such that the sacrificial supports (610) support the green body (620). The green body (620) is heated to remove a binder (36), forming a brown body. The brown body is sintered forming a metal or ceramic part (57), and the sacrificial supports (610) are positioned to support the brown body during sintering. The sacrificial supports (610) are then removed from the metal or ceramic part (57).

## Description

### BACKGROUND

The subject matter disclosed herein relates to additive manufacturing and, more specifically, to integrated sacrificial supports for binder jet additive manufactured articles.

Additive manufacturing, also known as 3D printing, generally involves printing an article one layer at a time using specialized systems. In particular, a layer of a material (e.g., a metal powder bed) may be deposited on a working surface and bonded with another layer of the same or a different material. Additive manufacturing may be used to manufacture articles (e.g., fuel nozzles, fuel injectors, turbine blades, etc.) from computer aided design (CAD) models using techniques such as, but not limited to, metal laser melting, laser sintering, and binder jetting. These additive manufacturing techniques melt, sinter, or chemically bind layers of material to generate the desired article. Additive manufacturing may facilitate manufacturing of complex articles and enable flexibility for customization of articles compared to techniques such as molding (e.g., cast molding, injection molding). Additionally, additive manufacturing can reduce the overall manufacturing costs associated with generating these complex articles compared to molding techniques generally used.

### BRIEF DESCRIPTION OF THE DRAWINGS

FIG. 1 is a flow diagram of an embodiment of a method of manufacturing a metal or ceramic body by a binder jet printing process according to embodiments disclosed and described herein;
FIG. 2 is a schematic diagram of an embodiment of a layer of material from which the metal or ceramic body is printed as a result of the method shown in FIG. 1;
FIG. 3 is a block diagram of an embodiment of a binder jet printer used to print the metal or ceramic body in accordance with the method of FIG. 1;
FIG. 4 is a cross-sectional view of an embodiment of a printed layer have particles of the material coated with a binder in accordance with the method of FIG. 1;
FIG. 5 is a top view of an embodiment of the printed layer shown in FIG. 4 having the binder selectively deposited in a pattern representative of a structure of the metal or ceramic body in accordance with the method of FIG. 1;
FIG. 6A is a schematic cross section of a metal or ceramic body having cylindrically- or pin-shaped sacrificial supports according to embodiments disclosed and described herein;
FIG. 6B is a schematic cross section of a metal or ceramic body having pin-shaped sacrificial supports with rounded tips according to embodiments disclosed and described herein;
FIG. 7A is a schematic cross section of a metal or ceramic body having cylindrically- or pin-shaped sacrificial supports with different lengths before deformation according to embodiments disclosed and described herein;
FIG. 7B is a schematic cross section of a metal or ceramic body having cylindrically- or pin-shaped sacrificial supports with different lengths after partial deformation according to embodiments disclosed and described herein;
FIG. 7C is a schematic cross section of a metal or ceramic body having cylindrically- or pin-shaped sacrificial supports with different lengths after deformation according to embodiments disclosed and described herein;
FIG. 8 is a 3-dimensional view of a metal or ceramic body having lattice-structured sacrificial supports according to embodiments disclosed and described herein;
FIG. 9 is a 3-dimensional view of a metal or ceramic body having broken lattice-structured sacrificial supports according to embodiments disclosed and described herein; and
FIG. 10 is a 3-dimensional view of a metal or ceramic body having sacrificial supports having stress risers according to embodiments disclosed and described herein.

### DETAILED DESCRIPTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments. The term "approximately" is meant to include any unintended variations from a stated value that occur as a result of engineering and manufacturing limitations.

There are several techniques for manufacturing articles, such as metal or ceramic parts used in a variety of machinery. For example, molding techniques such as sand molding, cast molding, and/or injection molding, among others, may be used to manufacture the metal or ceramic parts. As noted above, other techniques that may be used to manufacture metal or ceramic parts include additive manufacturing. For example, additive manufacturing techniques that may be used to manufacture articles include, but are not limited to, laser melting, laser sintering, and binder jetting. Additive manufacturing may be advantageous for fabricating metal or ceramic parts compared to molding techniques due, in part, to the flexibility of materials that may be used, the ability to manufacture complex articles, and low manufacturing costs.

Unlike laser melting and laser sintering additive manufacturing techniques, which heat the material to consolidate and build layers of the material to form a metal or ceramic part, binder jetting uses a chemical binder to bond particles of the material into layers that form a green body of the metal or ceramic part. The green body may be further processed (e.g., sintered) to consolidate the layers and form the part. Bonding layers of material using a chemical binder has been used in sand molding techniques to bond sand particles and form a sand mold that can be used to fabricate other parts. Similar to sand molding, in binder jet printing, the chemical binder is successively deposited into layers of metal powder to print the metal or ceramic part. For example, the chemical binder (e.g., a polymeric adhesive) may be selectively deposited onto a metal powder bed in a pattern representative of a layer of the part being printed. Each printed layer may be cured (e.g., via heat, light, moisture, solvent evaporation, etc.) after printing to bond the metal or ceramic particles of each layer together to form the green body metal or ceramic part. After the green body metal or ceramic part is fully formed, the chemical binder is removed during post-printing processes (e.g., debinding and sintering). It may be appreciated that such debinding and sintering steps are not part of sand molding processes, in which the chemical binder remains an integral part of the sand mold, even as the sand mold is subsequently used to form a molded metal or ceramic part. However, in binder jet 3D printing, the chemical binder is an integral part of the green body metal or ceramic part (e.g., the chemical binder is disposed within and in between each layer of the printed metal or ceramic part), and is subsequently removed during debinding and/or sintering to form a completed 3D printed metal or ceramic part. It may also be noted that binder jet printing enables the manufacture of metal or ceramic parts having complex, 3D geometries that are impossible or impractical to manufacture using a sand molding manufacturing process.

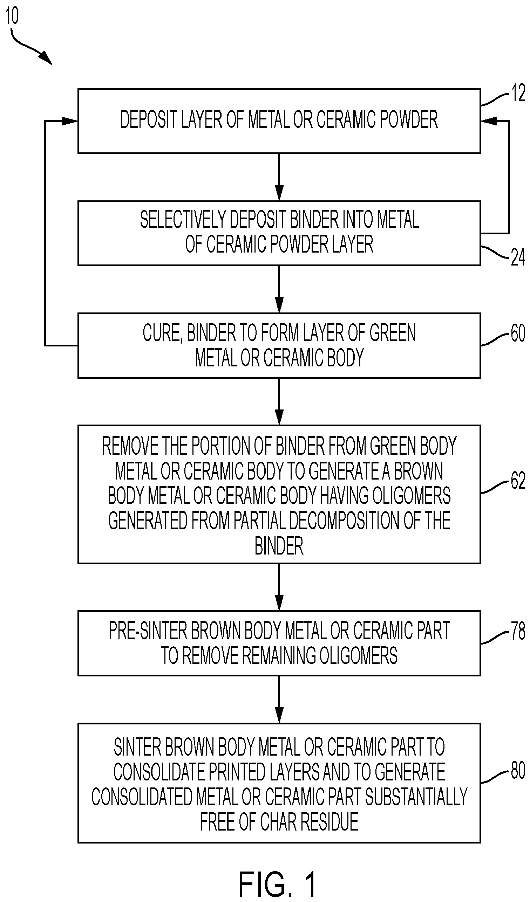

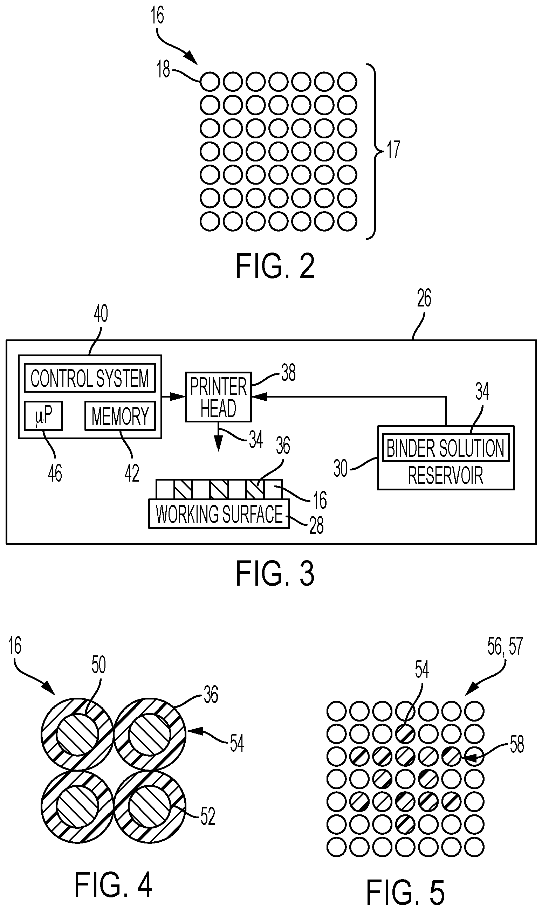

With the foregoing in mind, FIG. 1 is a block diagram depicting a method 10 for manufacturing an article via binder jet 3D printing. To facilitate discussion of aspects of the method 10 illustrated in FIG. 1, reference is made to FIGS. 2-5, which generally correspond to certain steps of the illustrated method 10. The method 10 of FIG. 1 begins with depositing a layer of a metal or ceramic powder that is used to manufacture an article of interest (block 12). For example, FIG. 2 is a schematic diagram of an embodiment of a layer of material from which the metal or ceramic body is printed as a result of the methods disclosed and described herein. In certain embodiments, the layer 16 may have a thickness 17 of between approximately 10 microns (µm) and approximately 200 µm. However, in other embodiments, the thickness 17 of the layer 16 may be any suitable value.

The metal or ceramic part to be printed may include a variety of metal parts having complex, 3D shapes, such as, but not limited to, fuel tips, fuel nozzles, shrouds, micro mixers, turbine blades, or any other suitable metal or ceramic part. Therefore, the material 18 used to print the article may vary depending on the type of article and the end use of the article (e.g., gas turbine engines, gasification systems, etc.). By way of non-limiting example, the metal powder 18 may include: nickel alloys (e.g., Inconel 625, Inconel 718, Rene'108, Rene'80, Rene'142, Rene'195, Rene'M2, and Marm-247); cobalt alloys (e.g., Hans 188 and L605); cobalt-chromium alloys, cast alloys: (e.g., X40, X45, and FSX414), titanium alloys, aluminum-based materials, tungsten, stainless steel, alumina, titania, or any other suitable material and combinations thereof. In certain embodiments, the metal or ceramic powder 18 may have particles having a particle size distribution that is between approximately 1 micron (µm) and 75 µm. However, the metal or ceramic powder 18 may have any other suitable particle size distribution.

Following deposition of the layer 16 of metal or ceramic powder 18, the method 10 continues with selectively depositing a binder into portions of the layer 16 according to a pattern (block 24). For example, the binder may be selectively printed into the layer 16 of metal or ceramic powder 18 using a print head that is operated by a controller based on a CAD design that includes representation of the layer 16 of the metal or ceramic part being printed. In embodiments, the metal or ceramic powder and binder may be deposited to form sacrificial supports, which will be described in more detail below.

For example, FIG. 3 is a block diagram of a binder jet printer 26 that may be used to selectively deposit the binder into the portion of the layer 16, according to the acts of block 24 (FIG. 1). In the illustrated embodiment, the binder jet printer 26 includes a working surface 28 that supports the layer 16 of metal or ceramic powder 18, a reservoir 30 that stores a binder solution 34 having a binder 36, and a printer head 38 that is fluidly coupled to the reservoir 30. The printer head 38 selectively deposits the binder solution 34 into the layer 16 of metal or ceramic powder 18 to print the binder 36 onto and into the layer 16 in a pattern that is representative of the layer of the metal or ceramic part being printed. The illustrated binder jet printer 26 includes a control system 40 for controlling operation of the binder jet printer 26. The control system 40 may include a distributed control system (DCS) or any computer-based workstation that is fully or partially automated. For example, the control system 40 can be any device employing a general purpose computer or an application-specific device, which may generally include memory circuitry 42 storing one or more instructions for controlling operation of the binder jet printer 26. The memory 42 may store CAD designs representative of a structure of the article being printed. The processor may include one or more processing devices (e.g., microprocessor 46), and the memory circuitry 36 may include one or more tangible, non-transitory, machine-readable media collectively storing instructions executable by the processor to control actions described herein.

As discussed above, the binder solution is selectively deposited into the layer 16 of metal or ceramic powder 18 in a pattern representative of the structure of the metal or ceramic part being printed. FIG. 4 is a cross-sectional view of the layer 16 of metal or ceramic powder 18 after deposition of the binder 36. As illustrated, the binder 36 coats an outer surface 50 of metal or ceramic powder particles 52, thereby generating binder-coated particles 54. The binder 36 bonds the binder-coated particles 54 according to the pattern printed into the layer 16 of metal or ceramic powder 18 to form a layer of the green body metal or ceramic part after curing. For example, FIG. 5 is a top view of a printed layer 56 of a green body metal or ceramic part 57 having the binder-coated particles 54 bonded to one another in a pattern 58 that is representative of the layer of the metal or ceramic part being printed.

Returning to FIG. 1, the method 10 may repeat the acts of blocks 12 and 24 to continue building up the metal or ceramic part in a layer-by-layer manner until a desired number of layers have been printed to generate the green body metal or ceramic part. The binder 36 bonds each successive layer 56 and provides a certain degree of strength (e.g., green strength) to the printed article such that the integrity of the structure of the printed (green body) metal or ceramic part is not affected during post-printing processes (e.g., debinding, sintering, etc.). That is, the green strength provided by the binder 36 maintains bonding between the particles of metal or ceramic powder within the layers 56 and blocks (e.g., resists, prevents) delamination of the layers 56 during handling and post-printing processing of the green body metal or ceramic part.

Following deposition of the layer 16 and printing of the binder 36, as set forth in blocks 12 and 24 of FIG. 1, the method 10 continues with curing the binder to form a layer of the green body metal or ceramic part (block 60). For example, as discussed above, the binder solution 34 may be a mixture of the binder 36 (e.g., polymer) and a solvent. While a portion of the solvent in the binder solution 34 may be evaporated during deposition (e.g., printing) of the binder 36, a certain amount of the solvent may remain within the layer 16 of metal or ceramic powder 18. Therefore, in certain embodiments, the green body metal or ceramic part may be thermally cured (in a subsequent, post-print step) at a temperature that is suitable for evaporating the solvent remaining in the printed layer 56 and allowing efficient bonding of the printed layers 56 of the green body metal or ceramic part.

In certain embodiments, the green body metal or ceramic part may be cured to allow polymerization of the polymerizable monomers in the binder solution 34 to yield the binder 36. For example, as discussed above, the binder 36 may be polymerized in situ after printing the binder solution 34 into the layer 16 of metal or ceramic powder 18. Following deposition of the binder solution 34, the one or more polymerizable monomers in the binder solution 34 may be cured to polymerize the one or more monomers and form the printed layer 56 of the green body metal or ceramic part. For example, the printed layer 56 may be exposed to heat, moisture, light, or any other suitable curing method that polymerizes the one or more polymerizable monomers in the binder solution 34 to form the binder 36 in the printed layer 56 before the next layer of metal or ceramic powder (block 12) is deposited on top of the printed layer 56. In certain embodiments, the binder solution 34 may include a radical initiator (e.g., AIBN) to facilitate polymerization of the one or more polymerizable monomers. In one embodiment, the one or more polymerizable monomers selectively deposited into the printed layer 56 may be cured immediately after forming the printed layer 56. That is, the method 10 may repeat the acts of blocks 12 and 24 of the method 10 after curing the one or more polymerizable monomers on each printed layer 56. In other embodiments, the one or more polymerizable monomers on the printed layer 56 may be cured after a desired number of printed layers 56 have been formed. Excess material 18 (e.g., the material 18 that is not bonded by the binder 36) may be removed after curing to prepare the green body for post-printing processing. After curing, the green body may undergo a drying step to remove any solvent and/or other volatile materials that may remain in the green body metal or ceramic part. For example, the green body may be dried in a vacuum, under an inert atmosphere (e.g., nitrogen (N₂), argon (Ar)) or air.

The binder used to form the green body metal part in binder jetting applications may be removed in a manner that mitigates both formation of char residue and metal oxide formation during post-printing processes. Accordingly, the method 10 includes removing (e.g., debinding) a portion of the binder 36 from the green body metal or ceramic part to generate a brown body metal part (block 62). As discussed above, the binders used in binder jetting applications provide strength (e.g., green strength) to the printed article. Therefore, as mentioned, it is presently recognized that it is desirable to remove only a portion (i.e., not all) of the binder during debinding of the green body metal or ceramic part to improve the handling strength of the resulting brown body metal or ceramic part before sintering.

During the partial removal of the reversible binder 36 during debinding, the green body metal or ceramic part may be heated to break down the binder 36 into oligomers that are smaller and have a lower molecular weight compared to the binder 36, but that are still too large to volatilize under the debinding conditions. For example, the green body metal or ceramic part may be heated to a temperature that is approximately 500° C or less, such as between approximately 250° C and approximately 450° C, during the debinding step of block 62. The conditions to which the green body metal or ceramic part is exposed during debinding decomposes the reversible binder 36 into the oligomers and generates the brown body metal or ceramic part having a substantial portion (e.g., approximately 95%, approximately 96%, approximately 97%, approximately 98%) of the binder 36 removed. The oligomers that remain in the brown body metal part after debinding may continue to bond the printed layers in the brown body metal part and provide a brown strength that maintains the structure of the brown body metal part during handling.

In certain embodiments, between approximately 98% and approximately 99.95% of the binder 36 may be removed during debinding by partial decomposition of the binder 36. Many of the small molecules that form during the partial decomposition of the binder may be gaseous at room temperature or at the debinding temperature. The portion of the oligomers that remain in the brown body metal part after debinding continue to bond the layers of metal or ceramic powder of the brown body metal or ceramic part and enable a suitable amount of brown strength. In one embodiment, the portion of the oligomers that remain in the brown body is between approximately 0.05% and approximately 2%. In other embodiments, the portion of the oligomers that remain in the brown body is between approximately 0.1% and approximately 1%.

In certain embodiments, debinding of the binder 36 may include heating the green body metal or ceramic part to a desired temperature (e.g., between approximately 250° C and approximately 450° C) in an oxygen-free environment (e.g., in a vacuum chamber). It is presently recognized that debinding the binder 36 in an oxygen-free environment may mitigate oxidation of certain metal powders 18. For example, debinding may be performed under nitrogen (N₂), argon (Ar), or another substantially inert gas. However, in certain embodiments, the debinding may be performed in air. In embodiments where the debinding occurs in air, it may be desirable to maintain the debinding temperature below 450° C to mitigate oxidation of the metal powder 18.

Following debinding of the binder 36, as set forth in block 62, the method 10 of FIG. 1 continues with pre-sintering the brown body metal or ceramic part to remove the oligomers remaining in the brown body metal or ceramic from the partial decomposition of the binder (block 78). For example, during pre-sintering, the brown body metal or ceramic part may be heated to pre-sintering temperatures that are between approximately 500° C and approximately 800° C. The heat applied to the brown body metal or ceramic part during pre-sintering decomposes the remaining oligomers into small molecules that quickly volatilize and escape from the brown body metal or ceramic part. The oligomers decompose cleanly into the smaller molecules, which may evaporate through the porous structure of the brown body, leaving substantially no residue. As such, when the brown body metal or ceramic part is sintered, the resulting consolidated metal or ceramic part may be substantially free of char. Accordingly, the consolidated metal or ceramic part may have properties similar to those of the metal or ceramic powder 18 used to print the metal or ceramic part.

Finally, the method 10 illustrated in FIG. 1 concludes with sintering the brown body metal or ceramic part to consolidate the particles of metal or ceramic powder without generating a char residue (block 80). During sintering, the brown body metal or ceramic part may be exposed to a concentrated source of energy (e.g., a laser, electron beam, or any other suitable energy source) that heats the brown body metal or ceramic part and consolidates the printed layers 56 of the brown body to form a substantially solid metal or ceramic part (e.g., the consolidated metal part) having a density that is greater than the density of the brown body metal or ceramic part. Sintering imparts strength and integrity to the brown body metal or ceramic part such that the consolidated metal or ceramic part is suitable for use in machinery. Sintering temperatures may be in excess of 1000° C, depending on the metal or ceramic powder 18 used to print the part. For example, in certain embodiments, the sintering temperature may be between approximately 1200° C and approximately 1300° C.

During binder removal and calcining the green or brown metal or ceramic body is placed in a chamber and heated to temperatures that are sufficient to remove binder from the green metal or ceramic body or calcine the brown metal or ceramic body. During binder removal and calcining, the green or brown metal or ceramic body will shrink in size. As the green or brown metal or ceramic body shrinks, friction occurs between the green or brown metal or ceramic body and any surface of the chamber on which the green or brown metal or ceramic body rests. This friction can cause deformation of the green or brown metal or ceramic body as it shrinks. In some instances, the friction may cause damage, such as cracking, in the final metal or ceramic body. In addition to the friction forces that can cause deformation or damage to the green or brown metal or ceramic body, localized hot spots can form where the green or brown metal or ceramic body contact a surface of the chamber. These localized hot spots can cause portions of green or brown metal or ceramic body to shrink faster than adjacent portions of the green or brown metal or ceramic body during binder removal or calcining. The faster rate of shrinkage can likewise cause deformation or damage to the green or brown metal or ceramic body.

To address the above issues, green or brown metal or ceramic bodies are often placed on setters made from a metal or ceramic material during binder removal and/or sintering, and the setter is placed in the chamber such that the setter is positioned between the green or brown metal or ceramic body and the surface of the chamber. However, even when a setter is used, friction between the setter and the green or brown metal or ceramic body may still be present during binder removal and calcining causing deformation and damage to the metal or ceramic body. For instance, when the setter is a metal or ceramic plate and a large surface area of the green or brown metal or ceramic body contacts a large surface area of the setter, the friction force on the green or brown metal or ceramic body during binder removal or sintering can be as significant as when a setter is not used. However, when the surface of the setter has a geometry that reduces the surface area of contact between the setter and the green or brown metal or ceramic body and the setter, the green or brown metal or ceramic body needs to be properly oriented on the setter to avoid deformation. Properly orienting the green or brown metal or ceramic body on the setter as the green or brown metal or ceramic body is loaded into the chamber can be very time consuming. Also, as the green or brown metal or ceramic body shrinks during binder removal and calcining, the green or brown metal or ceramic body can move out of orientation with the setter increasing the possibility of deformation and damage.

To address these concerns, embodiments of green or brown metal or ceramic bodies disclosed and described herein comprise sacrificial supports on at least one surface of the green or brown metal or ceramic body. The sacrificial supports are formed during the deposition of the metal or ceramic material and are integrated on the green metal or ceramic body. The sacrificial supports are designed to deform during binder removal and sintering, which reduces the stresses that can lead to deformation and damage of the metal or ceramic body. After the sintering process has been completed, the sacrificial supports may be removed from the metal or ceramic body, such as by grinding, cutting, or breaking the sacrificial supports from the metal or ceramic body. Accordingly, it should be understood that deformation and cracking in the sacrificial supports themselves during binder removal and sintering is not of concern and is, in embodiments, desirable. Moreover, because the sacrificial supports are formed as an integrated yet removable part of the metal or ceramic body, the proper orientation of the metal or ceramic body in relation to the sacrificial supports does not require precise placement of the green or brown metal or ceramic body on a setter. In embodiments, the metal or ceramic part may include a first green portion including the sacrificial supports that is attached to a second portion of the metal or ceramic part, such as via a ceramic coating or other adhesive.

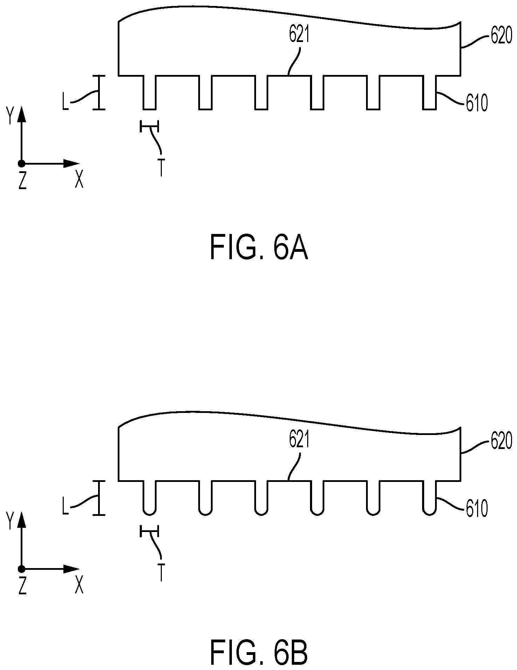

In one or more embodiments, and with reference to FIG. 6A, the sacrificial supports 610 are a plurality integrally formed pins positioned at a surface 621 the green or brown metal or ceramic body 620. In embodiments, the sacrificial supports 610 may be spaced equidistant from one another along the surface 621 of the green or brown metal or ceramic body 620. However, in embodiments, the sacrificial supports 610 may be spaced at varying distances from one another along the surface 621 of the green or brown metal or ceramic body 620. When loaded into a chamber for binder removal or sintering, the green or brown metal or ceramic body 620 is placed into the chamber such that the sacrificial supports 610 are positioned on a surface of the chamber such that the green or brown metal or ceramic body 620 is supported by the sacrificial supports 610 and elevated above the surface of the chamber.

Each of the sacrificial supports 610 has a length L (shown along the y-axis in FIG. 6A) and a thickness T (shown along the x-axis in FIG. 6A). In embodiments, the length L of each of the sacrificial supports 610 may be the same. However, in embodiments, the length L of one or more of the sacrificial supports 610 may be different from the length L of one or more other sacrificial support 610. Likewise, in embodiments, the thickness T of each of the sacrificial supports 610 may be the same. However, in embodiments, the thickness T of one or more of the sacrificial supports 610 may be different from the thickness T of one or more other sacrificial support 610. In embodiments, the length L and thickness T of the sacrificial supports 610 may vary according to the geometry of the green or brown metal or ceramic body 620. For instance, in areas of the green or brown metal or ceramic body 620 that are more prone to sagging, the thickness T of the sacrificial supports 610 may be greater than the thickness T of sacrificial supports 610 in areas of the green or brown metal or ceramic body 620 that are less prone to sagging. However, in embodiments, the thickness T of the sacrificial supports 610 may be less in areas of the green or brown metal or ceramic body 620 that are more prone to sagging than the thickness T of sacrificial supports in areas of the green or brown metal or ceramic body 620 that are less prone to sagging. Likewise, in areas of the green or brown metal or ceramic body 620 that are more prone to sagging, the length L of the sacrificial supports 610 may be greater than the length L of sacrificial supports 610 in areas of the green or brown metal or ceramic body 620 that are less prone to sagging. However, in embodiments, the length L of the sacrificial supports 610 may be less in areas of the green or brown metal or ceramic body 620 that are more prone to sagging than the length L of sacrificial supports in areas of the green or brown metal or ceramic body 620 that are less prone to sagging.

In one or more embodiments, the thickness T of the sacrificial supports 610 may vary depending on the length L of the sacrificial support 610. For instance, in embodiments, sacrificial supports 610 that have a greater length L may have a greater thickness T than the thickness T of sacrificial supports 610 with a shorter length L. However, in other embodiments, sacrificial supports 610 that have a greater length L may have a lesser thickness T than the thickness T of sacrificial supports 610 with a shorter length L. It should be understood that the thickness T and length L of the individual sacrificial supports may be determined based on the various design requirements of the metal or ceramic body 620. By integrating the sacrificial supports 610 into the formation of the green metal or ceramic body, any cross-sectional shape or geometry may be assigned to each individual sacrificial support 610.

FIG. 6A shows embodiments of sacrificial supports 610 that have flat surfaces at the outer end (in the y-direction away from the surface 621 of the green or brown metal or ceramic body 620). However, in embodiments as depicted in FIG. 6B, the sacrificial supports 610 may have rounded surfaces at the outer end of the sacrificial support 610. The rounded ends of the sacrificial supports 610 can decrease the surface area of contact between the sacrificial supports 610 and the chamber surface, which can reduce friction forces impacting part surface 621 as well as localized heating by conduction.

In embodiments, the sacrificial supports 610 are designed to deform and thereby absorb any stresses that would otherwise be placed on the green or brown metal or ceramic body 620. For instance, the length L and thickness T of various ones of the sacrificial supports 610 may be selected so that these sacrificial supports 610 deform relatively easily and the length L and thickness T of various other sacrificial supports 610 may be selected so that these sacrificial supports 610 do not deform easily. In this way, certain sacrificial supports can be configured to deform easily and absorb stresses that occur during binder removal and sintering while other sacrificial supports 610 can be configured to have less deformation and support the green or brown metal or ceramic body 620 even in the latter stages of binder removal and sintering.

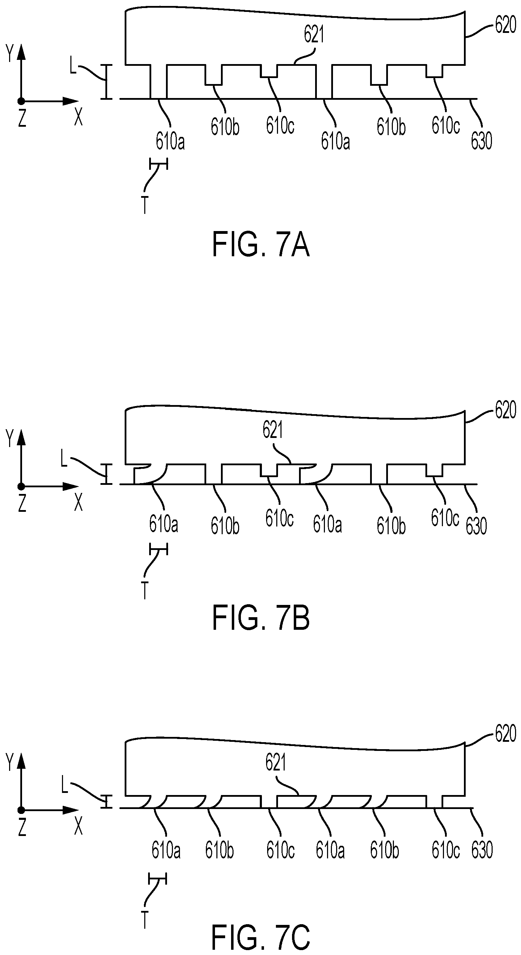

In embodiments, the sacrificial supports 610 may be arranged to have varying lengths L so that when a sacrificial support 610 is deformed or buckles, an adjacent sacrificial support 610 prevents the green or brown metal or ceramic body 620 from contacting a surface of the chamber. With reference now to FIG. 7A, sacrificial supports 610a, 610b, and 610c have differing lengths L such that the length L of sacrificial support 610a is greater than the length L of sacrificial support 610b, and the length L of sacrificial support 610b is greater than the length L of sacrificial support 610c. In the embodiment depicted in FIG. 7A, each sacrificial support 610a has the same length L, each sacrificial support 610b has the same length L and each sacrificial support 610c has the same length L. However, in embodiments, each sacrificial support 610a may have a different length L, each sacrificial support 610b may have a different length L and each sacrificial support 610c may have a different length L. However, in embodiments, each sacrificial support 610 is adjacent to another sacrificial support 610 that has a different length L.

As shown in FIG. 7A, initially the green or brown metal or ceramic body is supported by sacrificial supports 610a, which are in contact with a heating surface 630. As heating progresses, such as during binder removal or sintering, the green or brown metal or ceramic body 620 may shrink causing sacrificial supports 610a to become deformed, as shown in FIG. 7B. As sacrificial supports 610a become deformed, the green or brown metal or ceramic body 620 comes closer to the heating surface 630 causing sacrificial supports 610b, which have a shorter length L than the length L of sacrificial supports 610a, to contact the heating surface 630. With reference now to FIG. 7C, as heating continues to progress, the green or brown metal or ceramic body 620 may further shrink causing sacrificial supports 610a to further deform and sacrificial supports 610b to deform. As sacrificial supports 610a further deform and sacrificial supports 610b deform, the green or brown metal or ceramic body 620 comes closer to the heating surface 630 causing sacrificial supports 610c, which have a shorter length L than the length L of sacrificial supports 610b, to contact the heating surface 630. By having adjacent sacrificial supports 610a, 610b, and 610c with different lengths L the green or brown metal or ceramic body 620 can be provided with a staged support where different sacrificial supports 610a, 610b, 610c support the green or brown metal or ceramic body 620 at different times during binder removal or sintering. In this way, support for the green or brown metal or ceramic body can be tailored so that different portions of the green or brown metal or ceramic body 620 are supported at different times during binder removal or sintering.

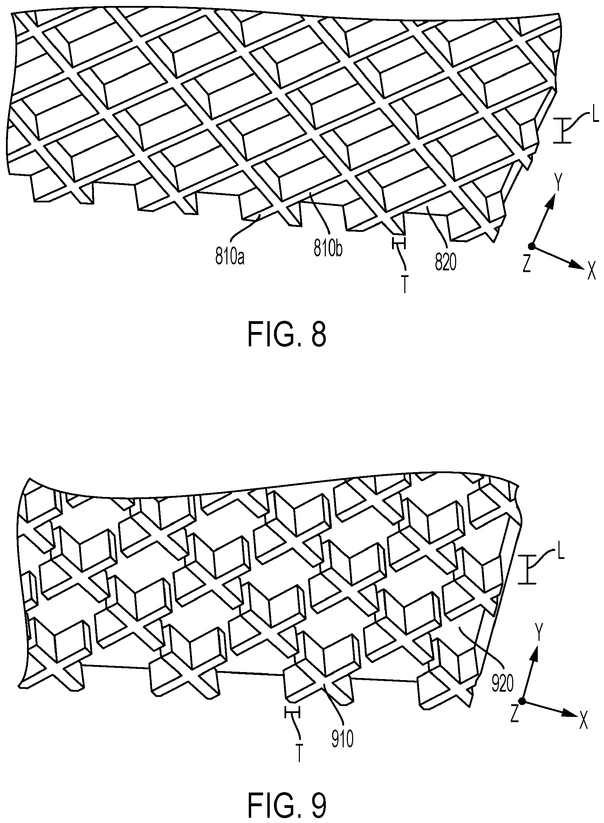

Although the sacrificial supports 610 depicted in FIG. 6A-7C have a cylindrical geometry, in embodiments the sacrificial supports 610 may have other geometries. With reference now to FIG. 8, the sacrificial supports 810a, 810b may, in embodiments, have a lattice structure where a plurality of elongated sacrificial supports 810a run in a first direction and a plurality of elongated sacrificial supports 810b run in a second direction that is substantially perpendicular to the first direction. Sacrificial supports 810a, 810b having a lattice structure can provide stable support to the green or brown metal or ceramic body 820 on which the sacrificial supports 810a, 810b are formed. In embodiments, the length L of the elongated sacrificial supports 810a, 810b may be uniform across the elongated sacrificial supports 810a, 810b. However, in embodiments, the length L of the elongated sacrificial supports 810a, 810b may vary across the elongated sacrificial supports 810a, 810b such that the elongated sacrificial supports 810a, 810b have a slope in the z-direction. Likewise, in embodiments, the thickness T of the elongated sacrificial supports 810a, 810b may be uniform across the elongated sacrificial supports 810a, 810b. However, in embodiments, the thickness T of the elongated sacrificial supports 810a, 810b may vary across the elongated sacrificial supports 810a, 810b such that the elongated sacrificial supports 810a, 810b have a slope in the x-direction and/or the y-direction.

With reference now to FIG. 9, the sacrificial supports 910 may have a broken lattice structure where needed for adequate support. In embodiments, the sacrificial supports 910 form an X or cross shape. Sacrificial supports 910 having a broken lattice structure can provide stable support to the green or brown metal or ceramic body 920 on which the sacrificial supports 910 are formed. In embodiments, the length L of the sacrificial supports 910 may be uniform across the sacrificial supports 910. However, in embodiments, the length L of the sacrificial supports 910 may vary across the sacrificial supports 910 such that the sacrificial supports 910 have a slope in the z-direction. Likewise, in embodiments, the thickness T of the sacrificial supports 910 may be uniform across the sacrificial supports 910. However, in embodiments, the thickness T of the sacrificial supports 910 may vary across the sacrificial supports 910 such that the sacrificial supports 910 have a slope in the x-direction and/or the y-direction.

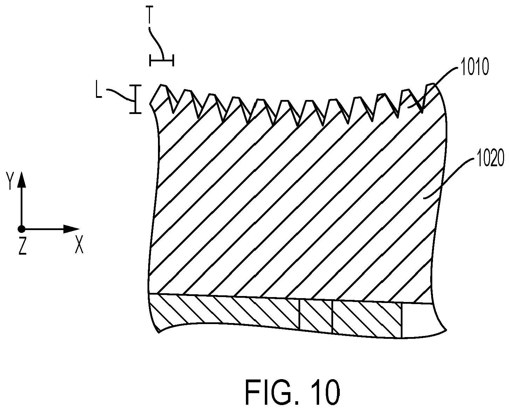

With reference now to FIG. 10, in embodiments sacrificial supports 1010 may have a pyramid or frustoconical shape including a stress-riser at the connection to the green or brown metal or ceramic body 1020. Sacrificial supports 1010 as depicted in FIG. 10 may deform more readily at an outer tip, thereby concentrating stresses incurred during binder removal and sintering to an outer portion of the sacrificial support 1010 and thereby reducing stresses to the green or brown glass or ceramic body 1020. In embodiments, the length L of the individual sacrificial supports 1010 may be the same. However, in embodiments, the length L of the individual sacrificial supports 1010 may be different. Likewise, in embodiments, the thickness T of the individual sacrificial supports 1010 may be the same. However, in embodiments, the thickness T of the individual sacrificial supports 1010 may be different.

Although sacrificial supports having a lattice structure as shown in FIG. 8 may provide improved support for the green or brown metal or ceramic body, this lattice structure can restrict gas and heat flow and, thereby, reduce the effectiveness of the binder removal and sintering processes. However, sacrificial supports have a pin or cylindrical structure depicted in the embodiments of FIG. 6A-7C and sacrificial supports having the broken lattice structure depicted in the embodiments of FIG. 9 allow heat and gas to circulate at the surface of the green or brown metal or ceramic body on which the sacrificial supports are formed. This circulating of heat and gas provides for a more uniform binder removal and sintering of the green or brown metal or ceramic body.

As mentioned above, after sintering the sacrificial supports may be removed from the metal or ceramic part. The sacrificial supports may be removed by any suitable method such as removing the sacrificial supports with a chemical solvent or mechanical methods, such as machining and grinding. In embodiments, the sacrificial supports may be removed from the metal or ceramic part by breaking the sacrificial supports from the metal or ceramic part followed by any necessary finishing, such as grinding and polishing. As disclosed herein, the sacrificial supports are formed as integral parts of the metal or ceramic part and do not bond metal or ceramic part to substrates on which the metal or ceramic part is set during debinding or sintering. Rather, the metal or ceramic part, including the sacrificial supports, can easily be removed from the heating chamber in embodiments. However, any damage to the metal or ceramic part upon removing from the heating chamber will preferably be limited to the sacrificial supports, thereby limiting damage to the metal or ceramic part.

The length L and the thickness T of the sacrificial supports are not particularly limited and can vary depending on the size of the metal or ceramic body. In embodiments, the sacrificial supports have a length L and thickness T that allows the sacrificial supports to be easily removed from the metal or ceramic body after the sintering step is complete. Accordingly, the sacrificial supports may, in embodiments, have thicknesses T that is from 1 mm to 10 mm, such as from 2 mm to 8 mm, or from 4 mm to 6 mm. The length L of the sacrificial supports are, in embodiments, long enough to separate the metal or ceramic body from the heating surface, but the length of the sacrificial supports should not be so long that they become onerous to remove or use excessive amounts of material. In embodiments, the length L of the sacrificial supports may be from 1 mm to 20 mm, such as from 2 mm to 18 mm, from 8 mm to 16 mm, or from 10 mm to 15 mm.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Clause 1 is a method for additive manufacturing a metal or ceramic part comprising: forming a green metal or ceramic body having sacrificial supports present on at least one surface of the green metal or ceramic body by depositing a layers of metal or ceramic powder, selectively depositing binder into the metal or ceramic powder, and curing the binder to form a green metal or ceramic layer; placing the green metal or ceramic body into a heating chamber such that the sacrificial supports are positioned to support the green metal or ceramic body; heating the green metal or ceramic body to remove the binder, thereby forming a brown metal or ceramic body; sintering the brown metal or ceramic body by heating the brown metal or ceramic body thereby forming a metal or ceramic part, wherein the sacrificial supports are positioned to support the brown metal or ceramic body during sintering; and removing the sacrificial supports from the metal or ceramic part.

Clause 2 includes the method for additive manufacturing a metal or ceramic part of clause 1, wherein the sacrificial supports are deformed during the sintering.

Clause 3 includes The method for additive manufacturing a metal or ceramic part of any preceding clause, wherein the sacrificial supports are a plurality of integrally formed pins.

Clause 4 includes the method for additive manufacturing a metal or ceramic part of clause 3, wherein each of the plurality of integrally formed pins have approximately the same length.

Clause 5 includes the method for additive manufacturing a metal or ceramic part of clauses 3 and 4, wherein each of the plurality of integrally formed pins have approximately the same thickness.

Clause 6 includes the method for additive manufacturing a metal or ceramic part of clauses 3 to 5, wherein the plurality integrally formed pins comprise at least a first portion of integrally formed pins having a first length and a second portion of integrally formed pins having a second length, and the first length is greater than the second length.

Clause 7 includes the method for additive manufacturing a metal or ceramic part of clause 6, wherein an integrally formed pin of the first portion of integrally formed pins is adjacent to at least one integrally formed pin of the second portion of integrally formed pins.

Clause 8 includes the method for additive manufacturing a metal or ceramic part of clauses 6 or 7, wherein sacrificial supports having the first length deform before sacrificial supports having the second length.

Clause 9 includeshe method for additive manufacturing a metal or ceramic part of clause 1, wherein the sacrificial supports have a lattice structure.

Clause 10 includes the method for additive manufacturing a metal or ceramic part of clause 9, wherein a length of the sacrificial support varies across the sacrificial support.

Clause 11 includes the method for additive manufacturing a metal or ceramic part of clause 9 or 10, wherein a thickness of the sacrificial support varies across the sacrificial support.

Clause 12 includes the method for additive manufacturing a metal or ceramic part of clause 1, wherein the sacrificial supports have a broken lattice structure.

Clause 13 includes the method for additive manufacturing a metal or ceramic part of clause 12, wherein a length of the sacrificial support varies across the sacrificial support.

Clause 14 includes the method for additive manufacturing a metal or ceramic part of clause 12 or 13, wherein a thickness of the sacrificial support varies across the sacrificial support.

Clause 15 includes the method for additive manufacturing a metal or ceramic part of any preceding clause, wherein the sacrificial supports have rounded tips.

Clause 16 includes the method for additive manufacturing a metal or ceramic part of clause 1, wherein the sacrificial supports comprise stress risers.

Clause 17 includes the method for additive manufacturing a metal or ceramic part of any preceding clause, wherein the sacrificial supports have a thickness from 1 mm to 10 mm.

Clause 18 includes the method for additive manufacturing a metal or ceramic part of any preceding clause, wherein the sacrificial supports have a length from 1 mm to 20 mm.

Clause 19 includes the method for additive manufacturing a metal or ceramic part of any preceding clause, wherein removing the sacrificial supports from the metal or ceramic part comprises grinding, cutting, or breaking the sacrificial supports from the metal or ceramic body.

Clause 20 includes the method for additive manufacturing a metal or ceramic part of any preceding clause, further comprising finishing the surface of the metal or ceramic body from which the sacrificial supports have been removed.

## Claims

1. A method for additive manufacturing a metal or ceramic part comprising:
forming a green metal or ceramic body having sacrificial supports present on at least one surface of the green metal or ceramic body by:
depositing a layer of metal or ceramic powder,
selectively depositing binder into the metal or ceramic powder, and
curing the binder to form a green metal or ceramic layer;
placing the green metal or ceramic body into a heating chamber such that the sacrificial supports are positioned to support the green metal or ceramic body;
heating the green metal or ceramic body to remove the binder, thereby forming a brown metal or ceramic body;
sintering the brown metal or ceramic body by heating the brown metal or ceramic body thereby forming a metal or ceramic part, wherein the sacrificial supports are positioned to support the brown metal or ceramic body during sintering; and
removing the sacrificial supports from the metal or ceramic part.

2. The method for additive manufacturing a metal or ceramic part of claim 1, wherein the sacrificial supports are deformed during the sintering.

3. The method for additive manufacturing a metal or ceramic part of any one of claims 1 or 2, wherein the sacrificial supports are a plurality of integrally formed pins.

4. The method for additive manufacturing a metal or ceramic part of claim 3, wherein each of the plurality of integrally formed pins have approximately the same length, thickness, or both.

5. The method for additive manufacturing a metal or ceramic part of any one of claims 3 or 4, wherein
the plurality integrally formed pins comprise at least a first portion of integrally formed pins having a first length and a second portion of integrally formed pins having a second length, and
the first length is greater than the second length.

6. The method for additive manufacturing a metal or ceramic part of claim 5, wherein an integrally formed pin of the first portion of integrally formed pins is adjacent to at least one integrally formed pin of the second portion of integrally formed pins.

7. The method for additive manufacturing a metal or ceramic part of any one of claims 5 or 6, wherein sacrificial supports having the first length deform before sacrificial supports having the second length.

8. The method for additive manufacturing a metal or ceramic part of any one of claims 1 to 7, wherein the sacrificial supports have a lattice structure.

9. The method for additive manufacturing a metal or ceramic part of any one of claims 1 to 8, wherein the sacrificial supports have a broken lattice structure.

10. The method for additive manufacturing a metal or ceramic part of any one of claims 1 to 9, wherein a length, a thickness, or both of the sacrificial support varies across the sacrificial support.

11. The method for additive manufacturing a metal or ceramic part of any one of claims 1 to 10, wherein the sacrificial supports have rounded tips.

12. The method for additive manufacturing a metal or ceramic part of any one of claims 1 to 11, wherein the sacrificial supports comprise stress risers.

13. The method for additive manufacturing a metal or ceramic part of any one of claims 1 to 12, wherein the sacrificial supports have a thickness from 1 mm to 10 mm and a length from 1 mm to 20 mm.

14. The method for additive manufacturing a metal or ceramic part of any one of claims 1 to 13, wherein removing the sacrificial supports from the metal or ceramic part comprises grinding, cutting, or breaking the sacrificial supports from the metal or ceramic body.

15. The method for additive manufacturing a metal or ceramic part of any one of claims 1 to 14, further comprising finishing the surface of the metal or ceramic body from which the sacrificial supports have been removed.
